Europäisches Patentamt

European Patent Office

Office européen des brevets

(11) Publication number: **0 501 489 A1**

# EUROPEAN PATENT APPLICATION

(21) Application number: **92103389.0**

(22) Date of filing: **27.02.92**

(51) Int. Cl.5: **G06F 3/12, G06F 13/42**

(30) Priority: **27.02.91 US 662072**

(43) Date of publication of application:
**02.09.92 Bulletin 92/36**

(84) Designated Contracting States:
**DE FR GB IT**

(71) Applicant: **Hewlett-Packard Company**
**3000 Hanover Street**
**Palo Alto, California 94304(US)**

(72) Inventor: **Bokman, Eric L.**
**9934 West Edna**
**Boise, Idaho 83704(US)**
Inventor: **Ryan, Michael J.**
**9750 Country Club Lane**
**Auburn, California 95603(US)**
Inventor: **Dobbs, Michael D.**
**1806 S.E. 154th Avenue**
**Vancouver, Washington 99684(US)**

(74) Representative: **Baillie, Iain Cameron et al**
**Ladas & Parry Altheimer Eck 2**
**W-8000 München 2(DE)**

(54) Advanced functionality parallel port interface.

(57) A peripheral unit (10) and computer (14) are connected by an existing communication link (12) which provides a plurality of unidirectional bit and command lines (40, 42, 44, 46) from the computer (14) to the peripheral unit (10) and a plurality of unidirectional, status lines (48, 50, 52, 54, 56) from the peripheral unit (10) to the computer (14). The peripheral unit (10) has an advanced functionality which enables transfer over its outgoing status lines (48, 50, 52, 54,56) of added peripheral unit data. The computer (14) emplaces inconsistent logic states on at least a pair of command lines (44, 46) to the peripheral unit (10) to inquire whether the peripheral unit (10) contains the advanced functionality capability. The peripheral unit (10) responds by transmitting an acknowledgement over at least one of its outgoing status lines (48) that it possesses the capability. The computer (14) then polls the peripheral unit's (10) status lines (48, 50) to determine the presence of the acknowledgement and, absent the sampling action, is unaware of the acknowledgement. The computer (14), subsequent to the acknowledgement, determines if added peripheral unit status data is indicated (52) as awaiting transfer, and if so, sets a command line (44) to request the added peripheral unit (10) status data. The peripheral unit (10) then places the data onto a status line (50) for transit to the computer (14), thereby enabling the preexisting communication link (12) to handle the added data.

FIG. 1

Rank Xerox (UK) Business Services

## FIELD OF THE INVENTION

This invention relates to a communications interface between peripheral units and personal computers, and more particularly, to a system for enabling a preexisting, limited capability, but widely utilized, interface to transfer additional status information from a peripheral unit to a personal computer.

## BACKGROUND OF THE INVENTION

Since its creation in the late 1970's, the personal computer has grown both in capability and complexity. Part of the growth in complexity has been in the area of peripherals for such personal computers, and in particular, output devices such as printers, plotters, and other similar hardcopy output devices. Such peripheral units include ink jet printers, impact printers, pen plotters, laser printers, etc.

A majority of personal computers connected to such peripheral units communicate via a parallel interface defined years ago by a company called "Centronics". In effect, that interface has become the "default" or standard interface in the marketplace (and will be herein referred to as the default interface). That interface has served its purpose for transporting data from the personal computer to the peripheral device, but it has a significant limitation in that it cannot send data from the peripheral unit back to the computer, other than limited status indications over prewired status lines.

The increase in sophistication of peripheral devices has created a need for them to be able to communicate detailed status information back to the personal computer. Such a capability will enable the peripheral unit to work faster and with a more user/friendly interface. For instance, the default interface presently provides a number of prewired status lines which connect to the personal computer and provide a very limited number of fault or status indications. For instance, only two error states are provided, i.e., a paper error or a fault in data transmission. In addition, only a limited number of peripheral status indications are enabled, i.e., that the peripheral is on line and ready to receive data; that the peripheral is busy; or that the peripheral is requesting another byte of data. There is no capability in the default interface, at present, that enables a peripheral unit to indicate its available memory, available fonts, available paper sizes, or that provides specific definitions of error conditions that exist in the peripheral unit.

While the above indicated additional information could be provided by the provision of a new interface, or by the provision of additional interconnections and cabling, such would render new peripherals incompatible with the presently installed base of personal computers that implement the default interface. Furthermore, it would add substantially to the cost of new products incorporating the new capabilities.

Accordingly, it is an object of this invention to provide an improved interface between a peripheral unit and a personal computer that enables added peripheral status information to be transmitted from the peripheral unit to the personal computer.

It is another object of this invention to provide advanced functionality to the default interface now existing between many peripheral units and personal computers.

It is still another object of this invention to provide advanced functionality for the default interface between peripheral units and personal computers, such functionality not requiring added or changed hardware.

## SUMMARY OF THE INVENTION

A peripheral unit and computer are connected by an existing communication link which provides a plurality of unidirectional bit and command lines from the computer to the peripheral unit and a plurality of unidirectional, status lines from the peripheral unit to the computer. The peripheral unit has an advanced functionality which enables transfer over its outgoing status lines of added peripheral unit data. The computer emplaces inconsistent logic states on at least a pair of command lines to the peripheral unit to inquire whether the peripheral unit contains the advanced functionality capability. The peripheral unit responds by transmitting an acknowledgement over at least one of its outgoing status lines that it possesses the capability. The computer then polls the peripheral unit's status lines to determine the presence of the acknowledgement and, absent the sampling action, is unaware of the acknowledgement. The computer, subsequent to the acknowledgement, determines if added peripheral unit status data is indicated as awaiting transfer, and if so, sets a command line to request the added peripheral unit status data. The peripheral unit then places the data onto a status line for transit to the computer, thereby enabling the preexisting communication link to handle the added data.

## DESCRIPTION OF THE DRAWINGS

Fig. 1 is a high level block diagram of a peripheral unit and a personal computer, showing the prior art default interface.

Fig. 2 is a timing diagram helpful in understanding the operation of the default prior art interface.

Fig. 3 is a waveform diagram helpful in understanding the operation of the invention.

Figs. 4-6 illustrate a flow diagram indicating the operation of the invention.

Fig. 7 is a timing diagram indicating the operation of the invention, if the peripheral unit indicates that no added peripheral unit data is available.

Fig 8 is a timing diagram illustrating the operation of the invention when a non-advanced functionality peripheral is attached to the personal computer.

DETAILED DESCRIPTION OF THE INVENTION

Prior to describing the operation of the invention, the prior art default interface will be described to enable an understanding of its operation. During the description, it will be assumed that a printer is attached to a personal computer, but it is to be realized that the description of the printer is only for explanatory purposes; that other peripheral units can function identically through the interface that forms the invention hereof; and that computers other than personal computers may employ the invention. In addition, only those aspects of the default interface relevant to the invention will be considered.

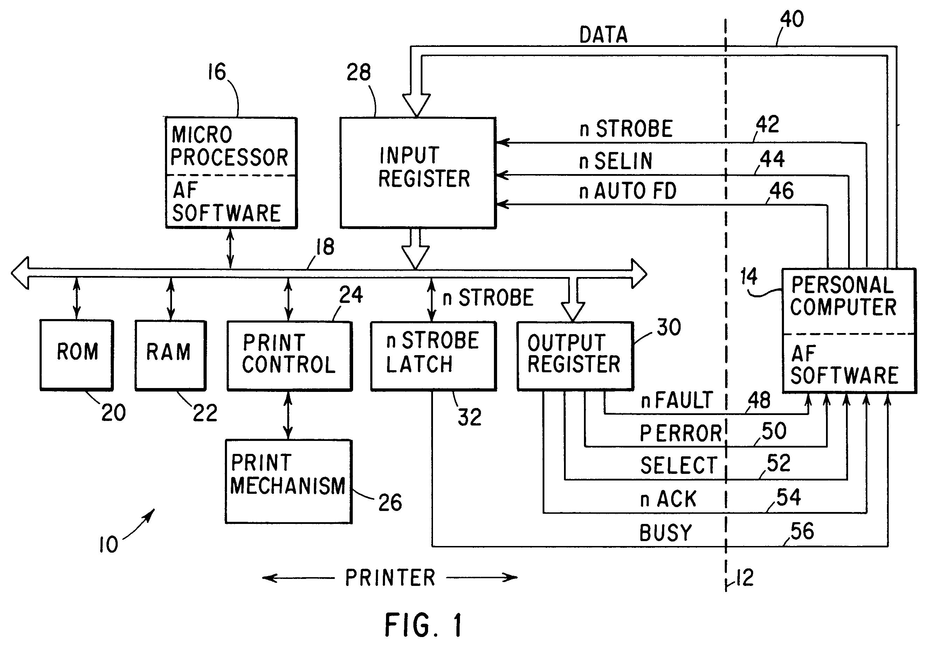

Referring now to Fig. 1, a printer 10 is connected via interface 12 to a personal computer 14. Interface 12 is schematically illustrated as a dashed line, however in actuality, interface 12 comprises prewired lines, both in printer 10 and personal computer 14 that interconnect through cabling and input/output connectors (not shown) resident both in printer 10 and personal computer 14. Each pin in the input/output connectors has a predetermined assignment, which assignment cannot be changed if the default interface is to function properly.

Printer 10 includes a microprocessor 16 which communicates with the remaining modules in the printer via bus 18. Also connected to bus 18 are a read only memory (ROM) 20, a random access memory (RAM) 22 and a print control unit 24 and associated print mechanism 26. Data and command inputs from personal computer 14 pass through input register 28, while output status signals are fed through output register 30 onto a plurality of output status lines. A strobe latch 32 is also connected to bus 18 and provides a "busy" signal output to personal computer 14.

Each of the data, command and status lines in the default interface perform the following defined functions:

Data lines 40 -
These are eight, parallel data lines which carry parallel data bits. These lines are unidirectional from personal computer 14 to printer 10.
nStrobe command line 42 -

This is an "active low" input line from personal computer 14 to printer 10 which signals when valid data has been placed on Data lines 40. Data is generally latched into the printer on the falling edge of the nStrobe signal. The prefix "n" in front of a signal name indicates that it is active in the low state. The absence of an "n" in front of a signal name indicates that it is active in the high state.
nSelIn, command line 44 -
This is a command line that carries a signal used for some peripherals as an enabling input. It is not a widely used signal in the more modern peripherals. This signal normally is set active low by personal computer 14 to select the peripheral and left there until reset by the personal computer.
nAutoFd, command line 46 -
This is a command line used for some older printers which commands the printer to increment to a next line after a line has been printed. More recent peripherals do not require an independent signal at the end of a line to cause an incrementing of the paper to a next print line.
nFault, status line 48 -
This line carries a status level from printer 10 to personal computer 14 and is set low to indicate that the printer has encountered an error condition.
PError, status line 50 -
This line carries a level that is active high to indicate that an operator-recoverable problem exists in the printer (e.g., a paper error)
Select, status line 52 -
This line carries an active high level signal from printer 10 and indicates to personal computer 14 that the printer is on-line and no errors exist. Otherwise, it is set low. When the printer status changes from off-line to the on-line state or a printer errors exists, the Select level is set high and a nAck pulse is generated. Similarly, when the printer status changes from on-line to off-line, the Select level is set low and a nAck pulse is generated.
nAck, status line 54 -
This line carries an active low level from printer 10 that is used to synchronize data transfers between personal computer 14 and printer 10. The nAck level is an indication that printer 10 is ready to receive a next byte of data, or that personal computer 14 should read status lines PError, nFault and Select because one of them may have changed state. When an interrupt enable bit in a port control register (not shown) in personal computer 14 is set, the falling (or rising) edge of the nAck signal will generate an interrupt in personal computer 14. It is important to realize that this interrupt is dependent upon that bit being set and if it is not set, the nAck signal is unable to create the interrupt. This prevents the nAck signal from being relied upon to invariably create an interrupt in personal computer 14. The importance of this fact will become apparent during the description of the advanced functionality interface operation.

Busy, status line 56 -

This line carries an active high output level from printer 10 to indicate that the printer is currently busy and no further data can be accepted. Busy status line 56 is set high in response to every high-to-low transition of the nStrobe signal on command line 42. This allows personal computer 14 to handshake data with printer 10. The Busy signal is also driven high when printer 10 shows off-line status, PError or nFault assertions.

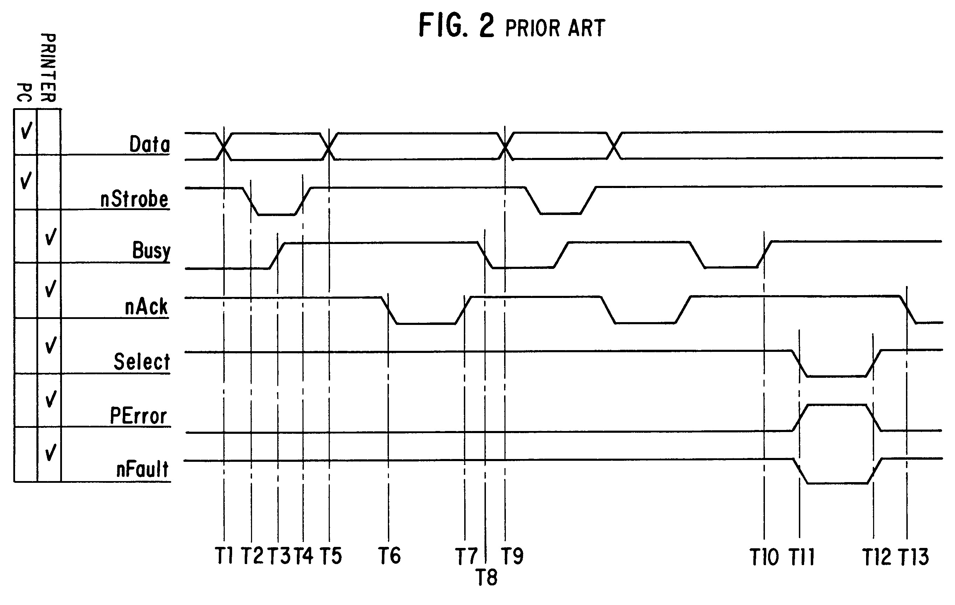

Turning now to Fig. 2 in conjunction with Fig. 1, the operation of the system of Fig. 1 employing the default interface will be described. In Fig. 2, the origin of each of the illustrated signals is shown to the left of the diagram. To commence data transfer from personal computer 14 (hereafter PC 14) to printer 10, data is initially written by PC 14 into its output buffer at T1 and is reflected onto Data lines 40. At T2, PC 14 sets the nStrobe signal to the low state, at which point data bits on lines 40 are indicated as valid.

At T3, printer 10 sets its Busy signal high in response to the nStrobe output. AT any time after the nStrobe signal falls to the low state, the bit data on lines 40 is latched into input register 28. At T4, PC 14 causes the nStrobe signal to go high. At T5, PC 14 can alter the data in its output buffer in accordance with the next byte to be transferred. At either T6 or T7, (depending upon the specific protocol within PC 14) the change in the nAck level on status line 54 creates an interrupt in PC 14 to enable PC 14 to prepare to transmit the next data byte. At T8, printer 10 generates a reset for nStrobe latch 32 which, in turn, causes the level on Busy status line 56 to revert to the low state, thus indicating that printer 10 is ready for the next byte.

The time line at T9 indicates the last time at which PC 14 can change the data in its output buffer. At this point, the cycle starts over again at T2 and proceeds until all the data bytes have been transmitted to printer 10.

At times T10-T13, all byte transfers between PC 14 and printer 10 have been accomplished. At this point, through the signal changes indicated, the connection is terminated and the signals on all of the indicated lines return to their original states.

From the above, it can be seen, that aside from the indicated status signals on lines 48, 50, 52, 54, and 56, the default interface provides no way for additional information to be transmitted back to PC 14 from printer 10. In addition, while some PC's have a built-in ability to enable bi-directional data transfers, there is (using the default interface) no way for a printer to signal the PC that it has additional data awaiting transfer.

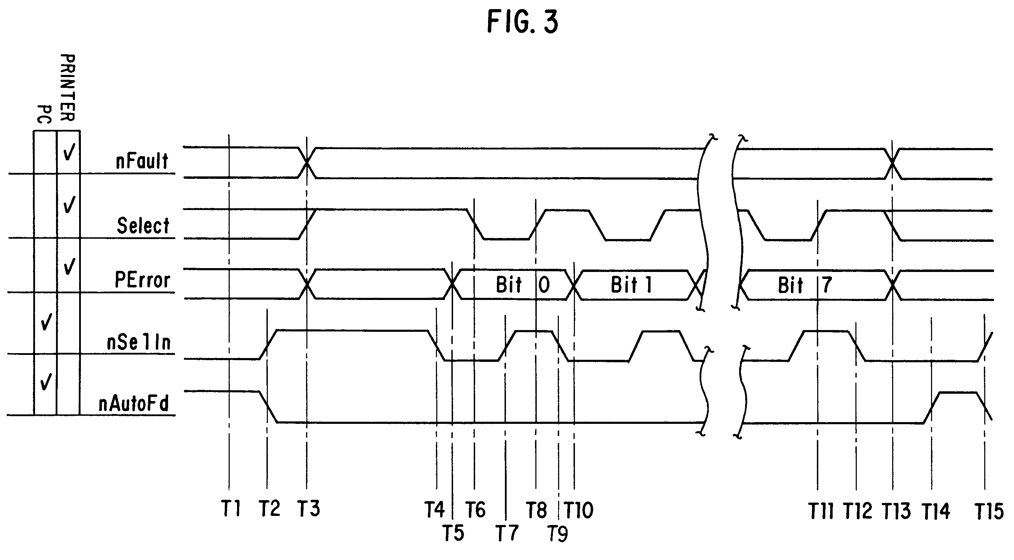

Turning now to Fig. 3 and Figs. 4-6, the operation of the advanced functionality interface that embodies the invention will be described (hereafter referred to as "AF interface mode").

It is to be initially understood that printer 10 and PC 14 are both provided with software that enables their operation in either the default interface mode or the AF interface mode. The default mode is maintained until PC 14 has successfully validated that it is connected to a peripheral unit which is capable of performing the AF interface mode. As will be seen hereinafter, the validation process is initiated by PC 14 periodically inquiring of the printer's status, which inquiry is repeated at regular intervals to insure that the printer's output buffer does not overflow. This repeated sampling process overcomes the problem of not being able to reliably interrupt PC 14 by the imposition of a level on one or more of the printer's status output lines.

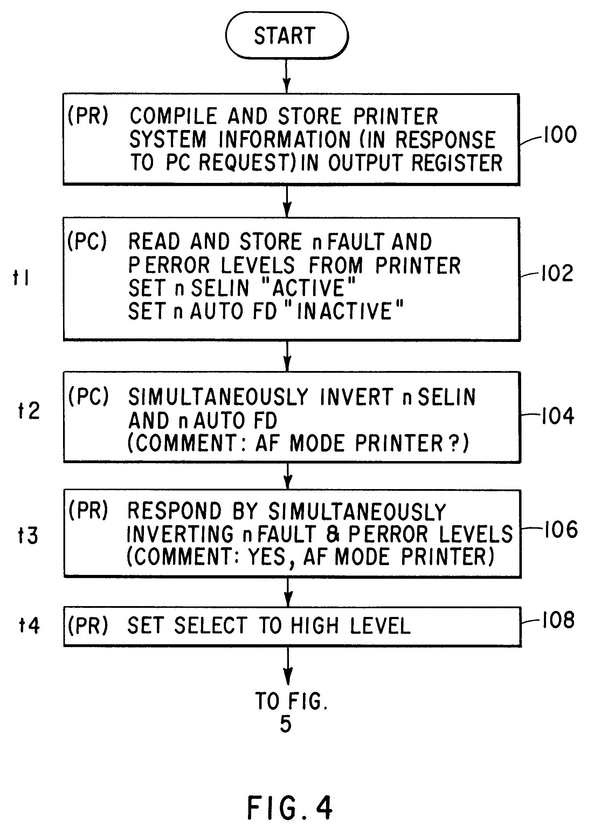

As above indicated, PC 14 and printer 10 normally operate in the default interface mode. In that mode, PC 14 periodically submits requests to printer 10, via data lines 40, for certain status information. In response to the queries of PC 14, printer 10 (via microprocessor 16) compiles and stores printer status information in output register 30 (or in another area of memory, if output register 30 has insufficient memory capacity to accommodate it). This step in indicated at box 100 in Fig. 4. At this point, PC 14 commences a handshaking action which will establish whether printer 10 does or does not have AF mode compatibility.

As shown in box 102 in Fig. 4, PC 14 initially reads and stores the levels on nFault and PError status lines 48 and 50 from printer 10. This enables PC 14 to know whether, subsequently, the levels on those lines change as a result of an action of printer 10. In addition, PC 14 sets nSelIn and nAutoFd lines 40 and 44 to their active and inactive states, respectively. The active state for nSelIn is low and the inactive state for nAutoFd is high.

At t2 (box 104), PC 14 simultaneously inverts the levels on nSelIn line 44 and AutoFd line 46. The resulting levels on lines 44 and 46 contradicts the usage of these lines in the default interface mode. When nSelIn command line 44 is high, PC 14 indicates that printer 10 is not selected. It is then contradictory for PC 14 to request the printer to run in the nAutoFd mode. This combination of signals is never seen in normal default interface operations. If these contradictory levels are seen by a non-AF peripheral, they are ignored because the peripheral has been deselected due to the inactive state on the nSelIn line. Thus, the combined and simultaneous inversion of the levels on lines 44 and 46 provides a way for PC 14 to inquire whether printer 10 has AF interface mode capability.

Since, in this case, printer 10 does have AF mode capability, it responds (box 106) by simultaneously inverting, at t3, the levels on its nFault and PError status lines 48 and 50, respectively. This action, in effect, acknowledges that printer 10 has AF mode compatibility. Additionally, at t4, printer 10 sets the level on Select line 52 to the high (active) state, thereby indicating that output register 30 has status data awaiting transmission, which data is in response to the initial status inquiry from PC 14.

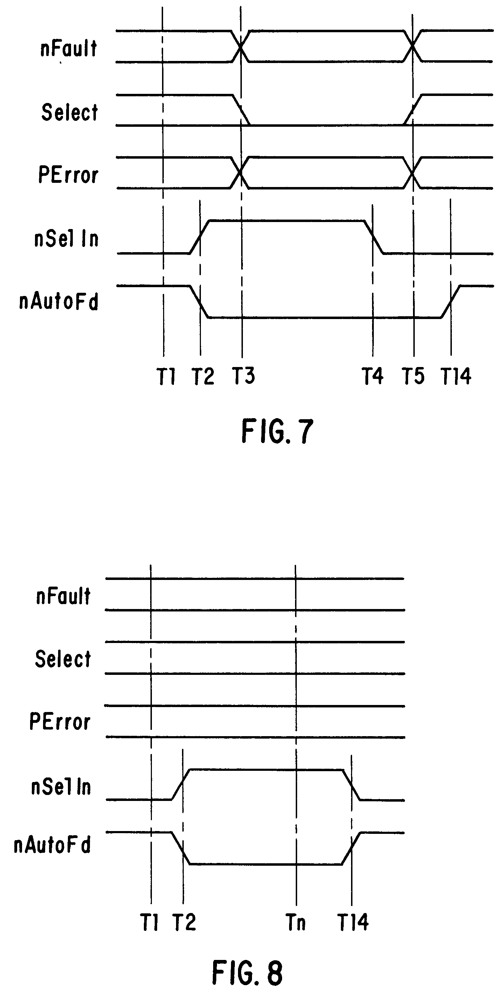

PC 14 responds to the simultaneous inversion of levels on nFault and PError lines 48 and 50 by first inquiring whether the levels on those lines have been inverted (box 110). This is accomplished by comparing the new inverted levels with those initially stored (see box 102). If the levels have not been inverted, PC 14 proceeds to abort the AF mode as shown in box 112 (to be hereinafter described with respect to Fig. 8).

Assuming the levels have been inverted, PC 14 next inquires whether the level on Select status line 52 is high (Box 114) and if not, it aborts the AF mode as shown in box 116. In other words, even though printer 10 has AF mode capability, the low level indicates that it has, for some reason, not placed data in output register 30 in response to the initial inquiry from PC 14. This may have occurred as a result of a fault or a problem in the printer or as a result of the fact that printer 10 is involved with another task. That mode will be further described with respect to the waveforms shown in Fig. 7.

Assuming that PC 14 finds the level high on Select status line 52, it responds by setting the level of nSelIn command line 44 to the low state (active), thereby requesting bit 0 from printer 10 (box 118). This action occurs at t4 and is followed at t5 by printer 10 causing the level on PError status line 50 to assume the level of the bit state of bit 0 (box 120).

Printer 10 hereafter will use the PError status line 50 to serially transmit data bits 0-7 to PC 14. A short time later at t6, after PError status line 50 has stabilized at the bit 0 state value, printer 10 sets Select status line 52 to the low state, indicating that the bit state on PError line 50 is ready for transfer (box 122). Within PC 14, the fall of the level on Select line 52 is sensed and serves to enable the latching of the bit 0 value on PError line 50 (box 124).

At t7, PC 14 raises nSelIn command line 44 to the high state, thereby indicating to Printer 10 that it has latched the bit value (box 126). At t8, printer 10 responds by again setting Select line 52 to the high state, indicating that the bit transfer is complete (box 128).

At this point, PC 14 determines whether it has received a full byte (box 130). If not, it returns to box 118 at t9 and the next bit transfer commences. Once all bits in a byte have been received by PC 14, PC 14 sets the level on nSelIn line 44 to the low state, indicating to printer 10 that the data transfer is finished (box 132). This occurs at time t12, and at time t13, printer 10 resets the levels on nFault, Select and PError lines 48, 52 and 50 to the default states (box 154). Finally, at t14, PC 14 resets nAutoFd command line 46 to the high state and terminates the byte transfer.

PC 14 now returns to box 100 and commences the process over again to acquire and read-in the next byte of data, until it determines (box 114) that the level on Select status line 52 is no longer high, at which point it terminates the AF mode.

Due to the byte oriented nature of PC's operating with MSDOS, and a desire to be backwards compatible with existing default interface hardware and software, block oriented transfers are not preferred in AF mode.

Each call by a software application program on PC 14 to the AF mode driver circuitry and software for a status inquiry will result in either one byte of printer status data being returned to PC 14 or an indication of no status information available. This validation sequence occurs on every byte transfer. Thus, the PC and printer validate the AF mode on every byte and no additional circuitry or software is required to determine if an intervening switch has occurred to interrupt or otherwise alter the connection between PC 14 and printer 10.

Turning now to Fig. 7, the waveforms of the various levels there indicated show the operation of the system of Fig. 1 in the event that printer 10 has no status information resident in output register 30. In such a circumstance, at t4, PC 14 finds that the level on Select status line 52 is low; immediately terminates the remainder of the AF mode; and proceeds to time t14, where all of the levels are reset to their default state.

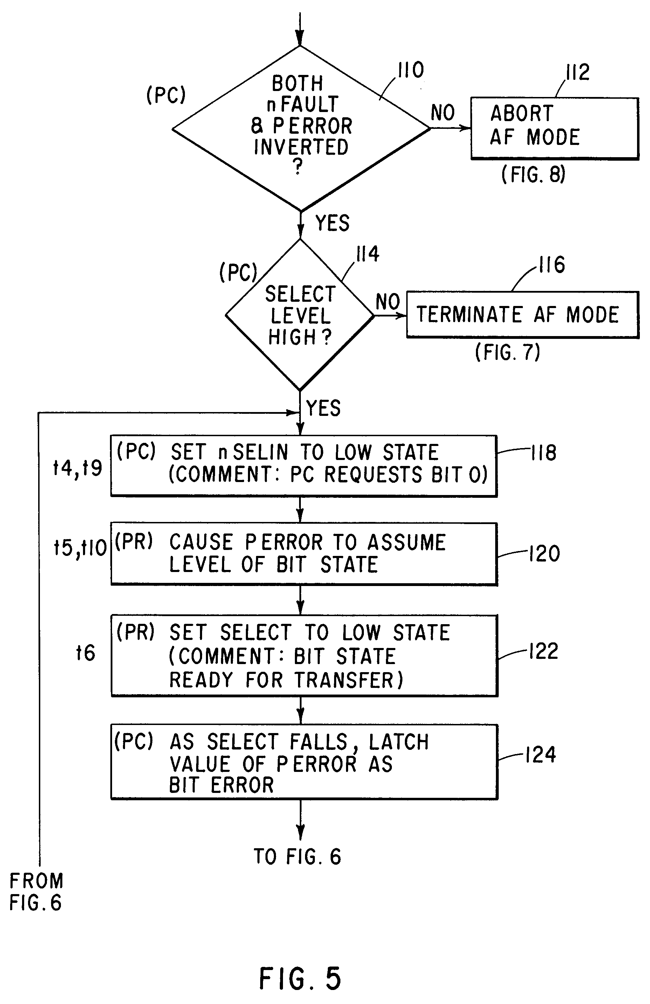

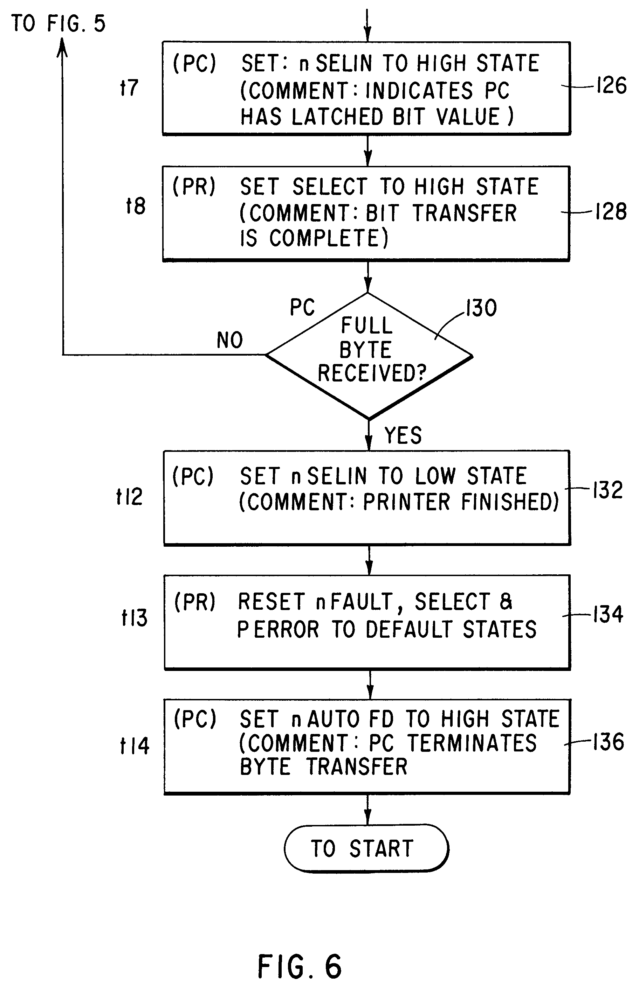

In Fig. 8, the waveforms are shown that occur when PC 14 finds that either the nFault or PError lines have not been inverted (see box 110 in Fig. 5). In other words, the printer, by not responding as expected, indicates that it does not implement the AF interface mode. In such case, at some time t(n), PC 14 examines those lines and finds an absence of inverted signals. In such case, the system immediately proceeds to time t14 and resets all levels to the default state.

A time-out provision is present in PC 14 to automatically cause it to revert to the default state should a response not be received from printer 10 within a predetermined, defined time period. In this manner, if a response should be delayed or nonexistent on one of lines 48-50, 52, 54, or 56, PC 14 will automatically revert to the default mode, upon the occurrence of the time-out signal.

In summary, PC to peripheral data is transferred in the default mode. The peripheral receives it, and places it in a buffer and eventually processes it. The PC asks for status of the peripheral via commands which it places in the default mode data stream along with other print data. The peripheral generates status information, both solicited and unsolicited, and places it in an output status buffer awaiting access by the PC. Since the peripheral has no safe way of interrupting the PC to inform it that peripheral status is available to be read, the PC is caused to periodically sample the peripheral input/output hardware to see if status information is ready to be sent. If such information is ready, the peripheral input/output hardware responds positively and a status byte is handshaked to the PC and subsequently transferred. During all of this operation, specific AF mode commands are transferred to the peripheral by state changes on at least two command lines, while status information is fed back to the PC via bit information on an allocated status line.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

**Claims**

1. A peripheral system (10) adapted for interconnection to a computer (14), said peripheral system including a communication link that interconnects to a plurality of incoming lines (40, 42, 44, 46) from said computer (14), said lines providing both data bits and command levels, said communication link also having a plurality of outgoing lines (48, 50, 52, 54, 56) that provide levels indicative of status of said peripheral system (10), said peripheral system (10) including advanced functional means for enabling said outgoing lines (48, 50, 52, 54, 56) to transmit added peripheral system data, said means comprising:

    processor means (16) for recognizing as a signal, inconsistent command level logic states on at least a pair (44, 46) of said incoming lines (40, 42, 44, 46) , and for transmitting an acknowledgement of said signal to said computer; and

    means (30) for transferring to said computer (14) over at least one outgoing status line (50), data bits indicative of said added peripheral system data, said means (30) for transferring actuated upon receipt by said peripheral system (10) of a predetermined command level on at least one of said incoming lines (44) from said computer (14).

2. The peripheral system as recited in claim 1, wherein said peripheral system (10) acknowledgement is manifested by an inversion of levels on at least a pair (48, 50) of said outgoing lines (48, 50, 52, 54, 56).

3. The peripheral system as recited in claim 2, wherein said acknowledgement indicates to said computer (14) that said peripheral system (10) includes said advanced functional means.

4. The peripheral system as recited in claim 3, wherein said processor means (16) includes additional means for setting a level on an outgoing status line (52) after said acknowledgement is transmitted and said predetermined command level is received from said computer (14), said set level indicating the availability of added peripheral system data.

5. The peripheral system as recited in claim 4, wherein said predetermined command level is only present on said input line (44) for the duration of a transfer of a byte of data bits, said processor means (16) responding to a subsequent absence of said predetermined command level to reset all outgoing lines (48, 50, 52, 54, 56) to manifest default status levels.

6. A peripheral (10) for interconnection to a computer (14), said peripheral (10) including circuitry and software and implementing a parallel interface, i.e. a "Centronics" interface, said circuitry including an interface connection (12) for accommodating a plurality of lines, a first set of said lines (40, 42, 44, 46) allocated to handling incoming bit states for parallel bit data and a plurality of command states from the computer (14), said command states including at least Strobe, SelIn and AutoFd command levels and a second set of lines (48, 50, 52, 54, 56), outgoing from said printer, allocated to indicate status levels for Fault, PError, Select, Ack and Busy designations, said peripheral (10) including advanced functionality means for providing detailed status information to said computer (14) over said outgoing lines (48, 50, 52, 54, 56) in addition to said status designations, the peripheral comprising:

means (16, 28) for responding to inconsistent logic states on a pair (44, 46) of incoming command lines from said computer (14), by inverting levels on a pair (48, 50) of said outgoing status lines, to signal the presence on said peripheral (10) of said advanced functionality means;

means (16, 30) for impressing a status level on an outgoing status line (52) to indicate the availability for output, of said detailed status information; and

means responsive to a command level received on a said incoming command line (44) to impress bit values on a said status line (50) for transmission to said computer.

7. The peripheral as recited in claim 6, wherein said bit values are transmitted serially to said computer (14) over said status line (50).

8. The peripheral as recited in claim 7, wherein said computer (14) removes said command levels from said incoming command lines after a byte of data bits have been serially received by said computer, and said advanced functionality means includes further means (16) for responding thereto by resetting all levels on said outgoing status lines to default values.

9. The peripheral as recited in claim 8, wherein said inconsistent logic states are received from said computer (14) over said Selln and AutoFd lines (44, 46).

10. The peripheral as recited in claim 9, wherein said means for responding to said inconsistent logic status inverts levels on said Fault and PError outgoing lines (48, 50).

11. The peripheral as recited in claim 10, wherein said means for impressing a status level places said level on said Select line (52).

12. The peripheral as recited in claim 11, wherein said responsive means senses an incoming command level on said Selln line (44) and impresses bit values on the outgoing PError line (50).

13. A system comprising a computer (14) and a peripheral unit (10), said computer (14) and peripheral unit (10) connected via an existing communication link (12) that includes a plurality of unidirectional bit lines and command lines (40, 42, 44, 46) from the computer (14) to the peripheral unit (10), and a plurality of unidirectional status lines (48, 50, 52, 54, 56) from the peripheral unit (10) to the computer (14), said peripheral unit (10) including advanced functional means for enabling transfer over said status lines of added peripheral unit data, the system comprising:

means in said computer for emplacing inconsistent logic states on at least a pair of said command lines (44, 46);

means (28, 16, 30) in said peripheral unit (10) responsive to said inconsistent logic states for transmitting an acknowledgement over at least a first status line (48), said acknowledgement indicating that said peripheral unit (10) includes said advanced functional means;

polling means in said computer (14) for sampling at least said first status line (48) to determine the presence of said acknowledgement, said computer (14), in the absence of said sampling, being unaware of said acknowledgement, said polling means responsive to said acknowledgement to further determine by sensing the level on a status line (52) if added peripheral unit data is present for transfer in said peripheral unit (10) and, if so, issuing a level on a command line (44) to request said added peripheral unit data; and

means (30) in said peripheral unit for responding to said level on said command line for impressing added peripheral unit data on a status line for transmission to said computer.

14. The system as recited in claim 13, wherein said polling means activates said sampling of said status line (48) automatically after said computer (14) emplaces said inconsistent logic states on said command lines (44, 46).

15. The system as recited in claim 14 wherein said acknowledgement is manifest by reversal of levels on at least two status lines (48, 50).

16. The system as recited in claim 15, wherein said poling means terminates said sampling action if an acknowledgement is not received within a predetermined time.

17. The system as recited in claim 16 wherein said peripheral unit means for responding (30) applies said added peripheral unit data on a serial-by-bit basis on said status line (50), said computer (14) terminating said data transfer after a byte of said data has been received, said emplacing means in said computer (14) being again activated to provide said inconsistent logic states and to commence transfer of a new byte of data thereafter.

18. The system as recited in claim 17 wherein said computer (14) includes default communication means for transmitting to said peripheral unit a query concerning said added peripheral unit data, whereby said peripheral unit (10) responds by loading said added peripheral unit data in an output register (30).

19. In a system comprising a computer (14) and a peripheral unit (10) connected via an existing communication link (12) that provides a plurality of unidirectional bit and command lines (40, 42, 44, 46) from the computer (14) to the peripheral unit (10), and a plurality of unidirectional status lines (48, 50, 52, 54, 56) from the peripheral unit (10) to the computer (14), said peripheral unit (10) including advanced functional means for transferring over a said status line (50), added peripheral unit data, the method comprising:

    (a) controlling said computer (14) to emplace inconsistent logic states on at least a pair of said command lines (44, 46), said inconsistent logic states in effect, inquiring whether said peripheral unit (10) implements said advanced functional means;

    (b) operating said peripheral unit (10) to respond to said inconsistent logic states by transmitting an acknowledgement over at least a first status line (48) indicating that it does implement said advanced functional means;

    (c) controlling said computer (14) to sample at least a said first status line (48) to determine the presence of said acknowledgement, and upon sensing the presence of said acknowledgement, sampling a status line (52) from said peripheral unit to determine if said added peripheral unit data is available and, if so, transmitting a command (44) to said peripheral unit to provide said added peripheral unit data; and

    (d) controlling said peripheral unit to transmit said added data on a selected status line (50) to said computer (14).

20. The method as recited in claim 19, wherein said step (b) transmits said acknowledgement by reversing levels on said first status line (48) and a second status line (50), and in said step (c), said computer sampling said first and second status lines (48, 50) to sense said revised levels.

21. The method as recited in claim 20, wherein said step (d) causes said peripheral unit (10) to transmit said added data serial-by-bit.

22. The method as recited in claim 21, further comprising the added step of:

    (e) terminating said transmission of said added data after a byte thereof has been transferred, and causing said method to recycle to step (a) thereafter.

23. In a peripheral system (10) adapted for interconnection to a computer (14), said peripheral system (10) provided with an existing communication link (14) that interconnects to a plurality of incoming command and data bit lines (40, 42, 44, 46) from said computer (14), said communication link (12) also having a plurality of outgoing status lines (48, 50, 52, 54, 56) from said peripheral system (10) to said computer (14), said peripheral system (10) including advanced functional means for enabling said outgoing lines to transmit added peripheral system (10) data, said peripheral system performing the method of:

    recognizing inconsistent command level logic states on at least a pair of said incoming command lines (44, 46) as a signal for said peripheral unit (10) to indicate whether it implements said advanced functional means, an acknowledgement indicating said implementation;

    transmitting an acknowledgement (52) to said computer; and

    responding to a received predetermined command level from said computer (14) over a command line (52) by transferring to said computer over at least one outgoing status line (50), data bits indicative of said added peripheral system data.

24. The method as recited in claim 23 wherein said peripheral unit (10) provides said acknowledgement by inverting levels on at least a pair of said outgoing status lines (48, 50).

25. The method as recited in claim 24 wherein said peripheral unit, subsequent to said acknowledgement, sets a level on a said outgoing status line (52) indicating the availability of said added peripheral unit data for output.

FIG. 1

FIG. 2 PRIOR ART

EP 0 501 489 A1

FIG. 3

START

(PR)　COMPILE AND STORE PRINTER
　　　　SYSTEM INFORMATION (IN RESPONSE ────100
　　　　TO PC REQUEST) IN OUTPUT REGISTER

t1　(PC)　READ AND STORE n FAULT AND
　　　　　PERROR LEVELS FROM PRINTER ────102
　　　　　SET n SELIN "ACTIVE"
　　　　　SET n AUTO FD "INACTIVE"

t2　(PC)　SIMULTANEOUSLY INVERT n SELIN
　　　　　AND n AUTO FD ────104
　　　　　(COMMENT: AF MODE PRINTER?)

t3　(PR)　RESPOND BY SIMULTANEOUSLY
　　　　　INVERTING n FAULT & PERROR LEVELS ────106
　　　　　(COMMENT: YES, AF MODE PRINTER)

t4　(PR)　SET SELECT TO HIGH LEVEL ────108

TO FIG.
5

# FIG. 4

(PC)   BOTH
       n FAULT          110
       & P ERROR  ——→  NO  →  ┌──────────────┐   112
       INVERTED               │   ABORT      │
       ?                      │   AF MODE    │
                              └──────────────┘
                                  (FIG. 8)

       ↓ YES

(PC)   SELECT          114
       LEVEL      ——→  NO  →  ┌──────────────────────┐   116
       HIGH?                  │ TERMINATE AF MODE    │
                              └──────────────────────┘
                                     (FIG. 7)

       ↓ YES

t4,t9   ┌────────────────────────────────────────┐
        │ (PC)  SET n SELIN TO LOW STATE          │——118
        │ (COMMENT: PC REQUESTS BIT O)            │
        └────────────────────────────────────────┘
                        ↓

t5,t10  ┌────────────────────────────────────────┐
        │ (PR)  CAUSE P ERROR TO ASSUME           │——120
        │       LEVEL OF BIT STATE                │
        └────────────────────────────────────────┘
                        ↓

t6      ┌────────────────────────────────────────┐
        │ (PR)  SET SELECT TO LOW STATE           │——122
        │ (COMMENT: BIT STATE                     │
        │  READY FOR TRANSFER)                    │
        └────────────────────────────────────────┘
                        ↓

        ┌────────────────────────────────────────┐
        │ (PC)  AS SELECT FALLS, LATCH            │——124
        │       VALUE OF P ERROR AS               │
        │       BIT ERROR                         │
        └────────────────────────────────────────┘
                        ↓

                  TO FIG. 6

FROM
FIG. 6

FIG. 5

14

TO FIG. 5

t7 | (PC) SET: n SELIN TO HIGH STATE (COMMENT: INDICATES PC HAS LATCHED BIT VALUE) | —126

t8 | (PR) SET SELECT TO HIGH STATE (COMMENT: BIT TRANSFER IS COMPLETE) | —128

PC

NO

FULL BYTE RECEIVED? —130

YES

t12 | (PC) SET n SELIN TO LOW STATE (COMMENT: PRINTER FINISHED) | —132

t13 | (PR) RESET n FAULT, SELECT & P ERROR TO DEFAULT STATES | —134

t14 | (PC) SET n AUTO FD TO HIGH STATE (COMMENT: PC TERMINATES BYTE TRANSFER | —136

TO START

FIG. 6

FIG. 7

nFault
Select
PError
nSel In
nAutoFd

T1  T2  T3        T4  T5  T14

FIG. 8

nFault
Select
PError
nSel In
nAutoFd

T1  T2        Tn    T14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 720 813 (CITIZEN)<br><br>* the whole document * | 1,6-8,<br>13,14,<br>19,23 | G06F3/12<br>G06F13/42 |
| P,Y | GB-A-2 237 420 (PHILIPS)<br><br>* page 4, line 29 - page 5, line 27; figure 1 * | 1,6,13,<br>19,23 | |
| Y | IBM TECHNICAL DISCLOSURE BULLETIN.<br>vol. 33, no. 3B, August 1990, NEW YORK US<br>pages 88 - 89; 'Query Printer Status'<br>* the whole document * | 1,6,13,<br>19,23 | |
| A | EP-A-0 212 335 (IBM)<br><br>* column 3, line 17 - column 6, line 55; figures 1-3 * | 1,6,13,<br>19,23 | |
| A | NUCLEAR INSTRUMENTS AND METHODS.<br>vol. 215, no. 3, October 1983, AMSTERDAM NL<br>pages 431 - 432;<br>N. COOPER: 'Interfacing a Multichannel Analyser to a Mainframe Computer'<br>* page 431, right column, paragraph 1 * | 1,6,13,<br>19,23 | TECHNICAL FIELDS SEARCHED (Int. Cl.5)<br><br>G06F |

The present search report has been drawn up for all claims

| Place of search | Date of completion of the search | Examiner |
|---|---|---|
| THE HAGUE | 23 JUNE 1992 | GILL S.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)